# EUROPEAN PATENT APPLICATION

(11) **EP 2 662 536 A2**
(43) Date of publication of application: **13.11.2013**
(21) Application number: 13151848.2
(22) Date of filing: 18.01.2013
(51) Int. Cl.: F01D 25/00, F01K 23/10, F02C 6/18

(54) **Gas Turbine Compressor Water Wash System**

(30) Priority: 23.01.2012 US 201213355581
(71) Applicant: General Electric Company, Schenectady, New York 12345 (US)
(72) Inventor: Saha, Rajarshi, 560066 Bangalore (IN); Merchant, Laxmikant, 560066 Bangalore (IN); Akana, Venkateswara Rao, 560066 Bangalore (IN)
(74) Representative: Cleary, Fidelma

(57) **Abstract**

A water wash system for use with a compressor (120) of a gas turbine engine (110). The water wash system may include a number of spray nozzles (280) in communication with the compressor (120), a heat recovery steam generator (150), a flow of heating water (160) from the heat recovery steam generator (150), and a tap off line (310) in communication with the flow of heating water (160) and the spray nozzles (280) so as to deliver the flow of heating water (160) to the compressor (120).
A corresponding method for operating a water wash system (250).

## Description

### TECHNICAL FIELD

The present application and the resultant patent relate generally to gas turbine engines and more particularly relate to a gas turbine compressor water wash and cleaning system for use in a combined cycle or a simple cycle system with reduced parasitic losses.

### BACKGROUND OF THE INVENTION

Generally described, a combined cycle power plant uses a combination of a gas turbine and a steam turbine to produce electrical power or otherwise drive a load. Specifically, a gas turbine cycle may be operatively combined with a steam turbine cycle by way of a heat recovery steam generator ("HRSG") and the like. The HRSG is a heat exchanger that allows feed water for the steam generation process to be heated by hot combustion gases of the gas turbine exhaust. The primary efficiency of the combined cycle arrangement is the utilization of the otherwise "wasted" heat of the gas turbine engine. Specifically, the efficiency of the HRSG is related to the efficiency of the heat transfer between the gas turbine combustion gases ("hot side") and the feed water and steam ("cold side").

Although a combined cycle system is efficient, there are numerous types of parasitic losses involved in overall system operation. For example, high pressure water from the HRSG may be used to heat the flow of fuel to the gas turbine engine so as to improve overall turbine performance. This high pressure water, however, generally is dumped directly to a condenser after heating the fuel without utilizing all of the pressure energy therein.

Another example of a parasitic loss is a compressor wash system. A loss in gas turbine performance attributable to fouling of the compressor may be detected by a decrease in power output and an increase in both heat rate and fuel consumption. As a result, both online and offline wash systems may be used. These wash systems generally spray droplets of water into the compressor to clean the compressor blades of contaminants and the like. These water wash systems generally include a demineralized water tank, a source of detergent, and one or more pumps positioned on a water wash skid and the like so at direct a flow of water into the compressor inlet. Although such water wash systems improve overall compressor efficiency, operation of the water wash system also is a parasitic loss.

There is thus a desire for an improved combined cycle and/or simple cycle system with reduced parasitic losses. For example, the parasitic losses associated with a compressor water wash system may be reduced and/or eliminated so as to improve overall system efficiency. Likewise, otherwise wasted heat may be used to provide useful work.

### SUMMARY OF THE INVENTION

The present invention provides a water wash system for use with a compressor of a gas turbine engine. The water wash system may include a number of spray nozzles in communication with the compressor, a heat recovery steam generator, a flow of heating water from the heat recovery steam generator, and a tap off line in communication with the flow of heating water and the spray nozzles so as to deliver the flow of heating water to the compressor.

The present invention further provides a method of operating a water wash system for a compressor of a gas turbine engine. The method may include the steps of diverting a flow of heating water from a heat recovery steam generator, passing the diverted flow of heating water through a performance heater to heat a flow of fuel for a combustor of the gas turbine engine, and flowing the diverted flow of heating water to a number of spray nozzles positioned about an inlet of the compressor.

The present invention further provides a water wash system for use with a gas turbine engine having a compressor and a combustor. The water wash system may include a number of spray nozzles in communication with the compressor, a water supply in communication with the combustor, and a high pressure pump downstream of the water supply. The water supply is in communication with the spray nozzles via the high pressure pump.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Embodiments of the present invention will now be described, by way of example only, with reference to the accompanying drawings, in which:
Fig. 1 is a schematic view of a combined cycle system with a gas turbine engine, a steam turbine, and a heat recovery steam generator.
Fig. 2 is a schematic view of the combined cycle system of Fig. 1 showing portions of the gas turbine engine, the steam turbine, the heat recovery steam generator, and a water wash system.
Fig. 3 is a schematic diagram of a combined cycle system as may be described herein showing portions of a gas turbine engine, a steam turbine, a heat recovery steam generator, and a water wash system.
Fig. 4 is a schematic diagram of an alternative embodiment of a combined cycle system as may be described herein.
Fig. 5 is a schematic diagram of a simple cycle system as may be described herein showing a gas turbine engine and a water wash system.

### DETAILED DESCRIPTION

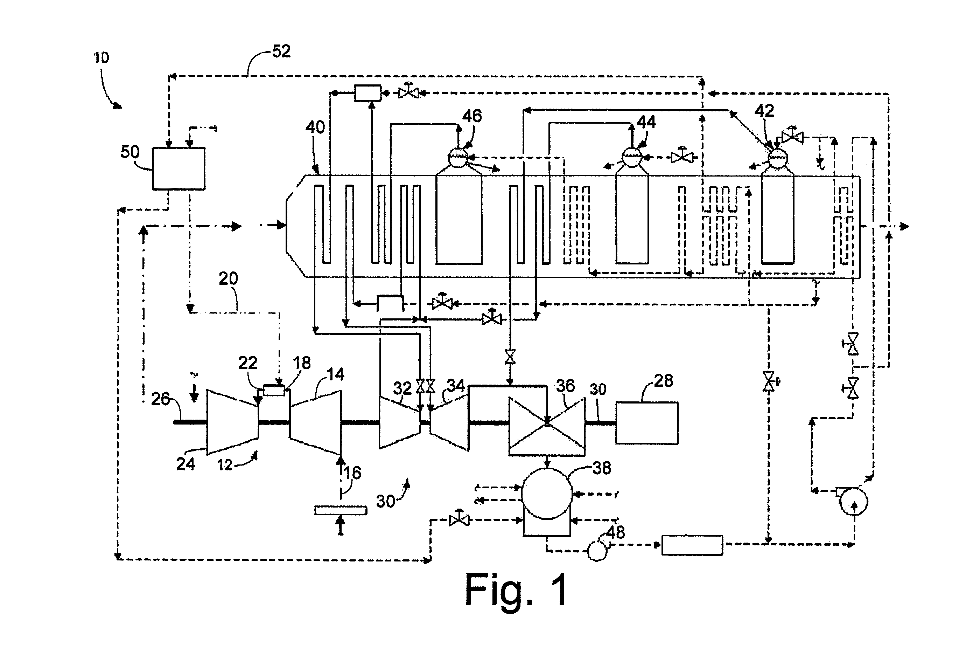

Referring now to the drawings, in which like numerals refer to like elements throughout the several views, Fig. 1 shows a schematic diagram of a combined cycle system 10. The combined cycle system 10 may include a gas turbine engine 12. The gas turbine engine 12 may include a compressor 14. The compressor 14 compresses an incoming flow of air 16. The compressor 14 delivers the compressed flow of air 16 to a combustor 18. The combustor 18 mixes the compressed flow of air 16 with a pressurized flow of fuel 20 and ignites the mixture to create a flow of combustion gases 22. Although only a single combustor 18 is shown, the gas turbine engine 12 may include any number of combustors 18. The flow of combustion gases 22 is in turn delivered to a turbine 24. The flow of combustion gases 22 drives the turbine 24 so as to produce mechanical work. The mechanical work produced in the turbine 24 drives the compressor 14 via a shaft 26 and an external load 28 such as an electrical generator and the like. The gas turbine engine 12 may use natural gas, various types of syngas, and other types of fuels. The gas turbine engine 12 may have different configurations and may use other types of components.

The combined cycle system 10 also includes a steam turbine 30. The steam turbine 30 may include a high pressure section 32, an intermediate pressure section 34, and one or more low pressure sections 36 with multiple steam admission points at different pressures. The low pressure section 36 may exhaust into a condenser 38. One or multiple shafts 26 may be used herein. Other configurations and other components also may be used herein.

The combined cycle system 10 also may include a heat recovery steam generator 40 ("HRSG"). The HRSG 40 may include a low pressure section 42, an intermediate pressure section 44, and a high pressure section 46. Each section 42, 44, 46 generally includes one or more economizers, evaporators, and superheaters. Condensate from the condenser 38 may be fed to the HRSG 40 via a condensate pump 48. The condensate passes through the sections 42, 44, 46 of the HRSG 40 and exchanges heat with the flow of combustion gases 22 from the gas turbine engine 12. The steam produced in the HRSG 40 then may be used to drive the steam turbine 30. Likewise, hot, high pressure water produced in the HRSG may be used in a performance heater 50 to heat the incoming flow of fuel 20 to the combustor 18. The water used in the performance heater 50 generally is dumped to the condensers 38 after use. Other components and other configurations may be used herein.

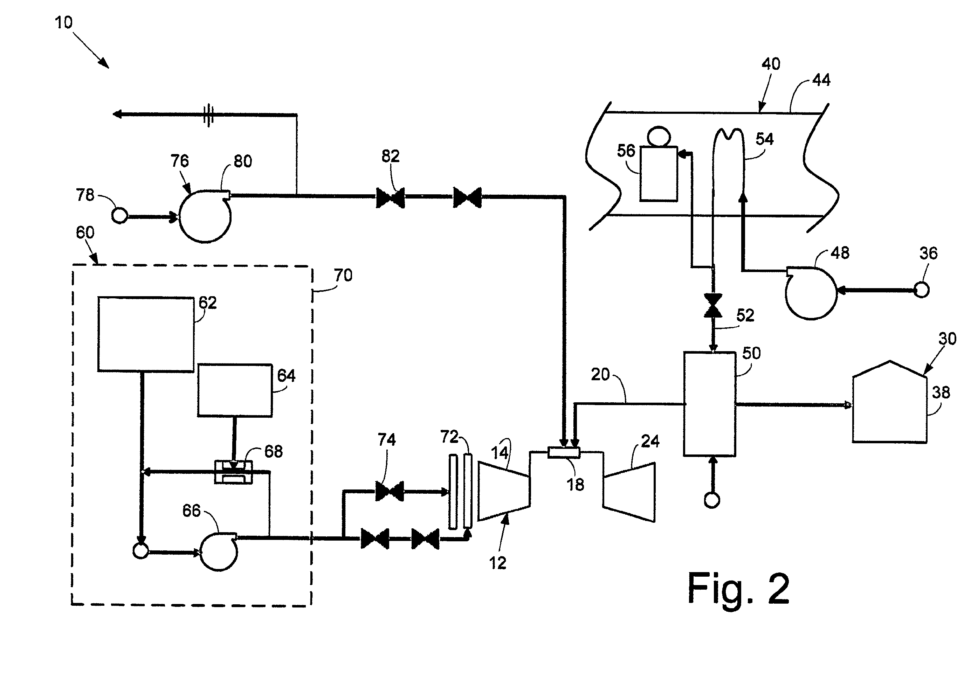

Fig. 2 shows portions of the combined cycle system 10 in greater detail. Specifically, a flow of heating water 52 for use in the performance heater 50 may be taken from the intermediate pressure section 44 of the HRSG 40 downstream of an intermediate pressure economizer and before an intermediate pressure evaporator 56. The flow of heating water 52 may pass through the performance heater 50 where the heating water 52 exchanges heat with the flow of fuel 20 before the flow of fuel 20 enters the combustor 18. The heating water 52 may be under high pressure. The heating water 52 then may be dumped in the condenser 38 without further use.

The combined cycle system 10 also may use a compressor water wash system 60 about the compressor 14 of the gas turbine engine. Generally described, the compressor water wash system 60 may include a water tank 62 with a supply of demineralized water therein, a detergent tank 64 with a detergent therein, and a water wash pump 66. An eductor 68 or other type of supply mechanism may be used to supply the detergent from the detergent tank 64 in an offline mode. The water tank 62, the detergent tank 64, the water wash pump 66, the eductor 68, and other components may be positioned on a water wash skid 70 or otherwise.

The compressor water wash system 60 also may include a number of spray nozzles 72. The spray nozzles 72 may be positioned about an inlet of the compressor 14. The compressor water wash system 60 also may include a number of valves 74. The valves 74 may be used to vary the pressure of the water spray and the like. The compressor water wash system 60 may operate in online or offline mode with the water wash pump 66 and the valves 74 providing the water at differing pressures and speeds. An online water wash generally may be performed when the angle of the inlet guide vanes of the compressor 14 are greater than about seventy degrees (70°) and the inlet temperature is greater than fifty (50) degrees Fahrenheit (about ten (10) degrees Celsius). The online water wash may be engaged for about fifteen (15) to about (30) minutes per day. An offline water wash may be done periodically or during an outage. The offline water wash may be done at cranking speed. Many different parameters and operating procedures may be used herein. Other components and other configurations also may be used herein.

The combined cycle system 10 also may include a water injection system 76. The water injection system 76 may include a demineralized water supply 78, a high pressure water injection pump 80, and a number of valves 82. In certain types of dual fuel combustors 18, water may be applied during liquid fuel operations above about a thirty percent (30%) load so as to maintain overall emissions in compliance with applicable regulations. Many different parameters and operating procedures may be used herein. Other components and other configurations also may be used herein.

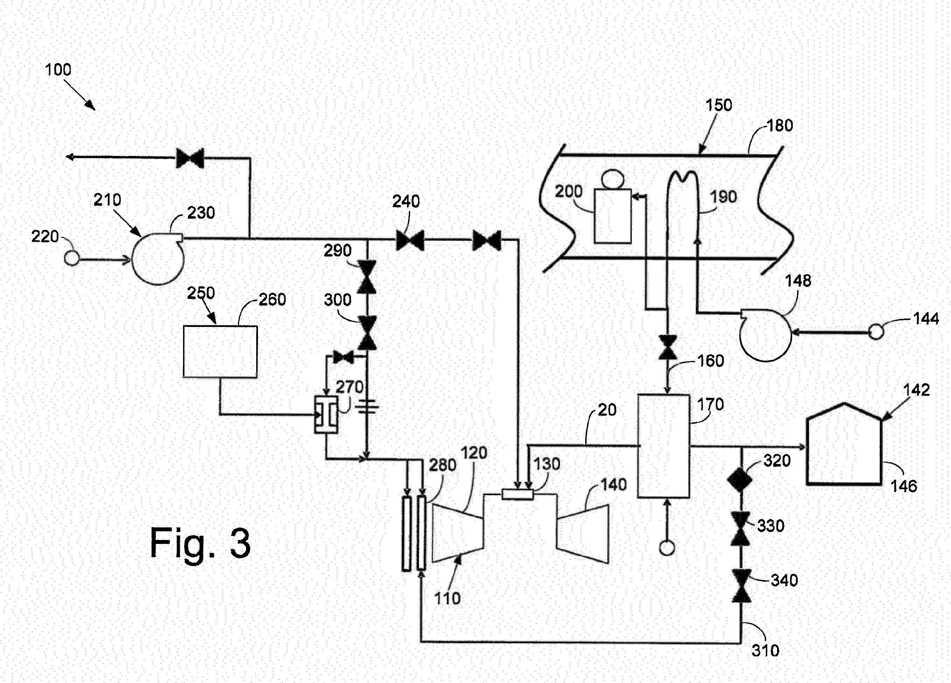

Fig. 3 is a schematic diagram of an example of a combined cycle system 100 as may be described herein. The combined cycle system 100 may include a gas turbine engine 110 similar to that described above. The gas turbine engine 110 may include a compressor 120, a combustor 130, and a turbine 140. Other components and other configurations may be used herein. The combined cycle system 100 also may include a steam turbine 142 similar to that described above. The steam turbine 142 may include a low pressure section 144, a condenser 146, a pump 148, and other components as described above.

Likewise, the combined cycle system 100 may include a heat recovery steam generator 150 ("HRSG") similar to that described above. The HRSG 150 may divert a flow of heating water 160 to a performance heater 170 so as to heat the flow of fuel 20. The flow of heating water 160 may be taken from an intermediate pressure section 180 of the HRSG 150 downstream of an intermediate pressure economizer 190 and before an intermediate pressure evaporator 200. Other components and other configurations may be used herein.

The combined cycle system 100 also may include a water injection system 210. Similar to that described above, the water injection system 210 may include a demineralized water supply 220, a high pressure water injection pump 230, and a number of valves 240. The water injection system 210 thus provides demineralized water to the combustor 130 and the like. Other components and other configurations may be used herein.

The combined cycle system 100 also may include a compressor water wash system 250. The compressor water wash system 250 may include a detergent tank 260 with a detergent therein, an eductor 270 or other type of supply mechanism, and a number of spray nozzles 280. The spray nozzles 280 may be positioned about an inlet of the compressor 120. Other components and other configurations also may be used herein.

Instead of using a stand alone water tank 62 on a water skid 70, the compressor water wash system 250 described herein may be in communication with the water injection system 210. Specifically, the demineralized water supply 220 and the high pressure water injection pump 230 may be in communication with the spray nozzles 280 via a number of valves: an on-and-off valve 290, a pressure relief valve 300, and the like. Other components and other configurations may be used herein. The compressor water wash system 250 also may be in communication with the flow of heating water 160 via a tap off line 310. The tap off line 310 may capture the flow of heating water 160 downstream of the performance heater 170 and before the condenser 148 of the steam turbine 144. The tap off line 310 thus may be in communication with the spray nozzles 280. The tap off inline 310 may have a filter 320, an on/off valve 330, one or more pressure relief valves 340, and the like. Other components and other configurations may be used herein.

In use, the flow of heating water 160 from the intermediate pressure section 180 of the HRSG 150 may be used in the compressor water wash system 250 via the tap off line 310 in an on-line mode. The pressure of this flow of heating water 160 may be regulated via the pressure relief valves 340 and the like. The pressure energy of the flow of heating water 160 thus may be captured for useful work without the use of associated pumps and parasitic energy losses.

If the flow of heating water 160 is not available from the intermediate pressure section 180 of the HRSG or if the flow if heating water 160 cannot be used due to its high temperature, the compressor water wash system 250 also may use the demineralized water supply 220 and the high pressure water injection pump 230 of the water injection system 210 as regulated by the pressure relief valve 300 and the like in the on-line mode. Further, the compressor water wash system 250 also may use the water injection system 210 in an offline mode. Specifically, the eductor 270 may add detergent from the detergent tank 260. The use of the water injection system 210 thus eliminates the need for a separate water wash pump and tank. The water then may be recirculated back to the demineralized water supply 220 and the like. Other components and other configurations may be used herein.

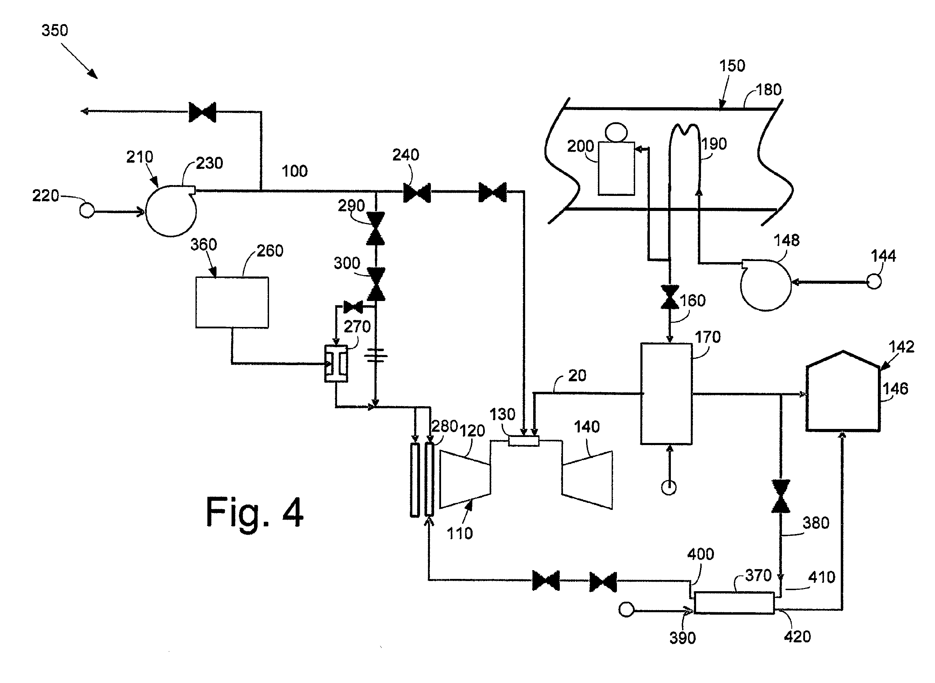

Fig. 4 shows a further embodiment of a combined cycle system 350 as may be described herein. The combined cycle system 350 may be similar to that described above. In this example, a compressor water wash system 250 may include a pressure exchanger 370 on a tap off line 380. Specifically, the pressure exchanger 370 is a positive displacement pressure exchanging device. As is known, the pressure exchanger 370 exchanges pressure between fluid flows via rotor rotation and the like. The tap off line 380 may extend from downstream of the performance heater 170 to the spray nozzles 280. The pressure exchanger 370 also may be in communication with the demineralized water supply 220 or other type of water supply. The pressure exchanger 370 thus may have a low pressure demineralized water input 390 in communication with the demineralized water supply 220 and a high pressure demineralized water output 400 in communication with the spray nozzles 280. Likewise, the pressure exchanger 370 may include a high pressure heating water input 410 in communication with the performance heater 170 and a low pressure heating water output 420 in communication with the condenser 148. The pressure exchanger 370 provides a highly efficient pressure exchange without mixing of the respective fluid streams. Specifically, the pressure exchanger 370 thus permits the indirect utilization of the pressure energy of the heating water 160 to drive the spray nozzles 280.

The combined cycle system 100 described herein thus effectively utilizes the waste heat of the flow of heating water 160 to enable overall improved performance and efficiency. Specifically, energy associated with the flow of heating water 160 may be used in the compressor water wash system 250 via the tap off line 310 instead of being dumped directly to the condenser 148. Additionally, a tap off also may be taken from the high pressure water injection pump 230 of the water injection system 210 as the online water wash is carried at near base load or base load during which the water injection pump 230 is running. Likewise, the existing high pressure water injection pump 230 may be used for an offline water wash such that the separate water wash pump 66 and water wash skid 70 may be eliminated. Eliminating the water wash skid 70 reduces the overall footprint and provides a cost saving. A reduction in parasitic losses also is provided by using the waste energy of the flow of heating water 160. The use of the compressor water wash system 250 should have little impact on the sizing and use of the overall demineralized water systems and/or make-up water systems.

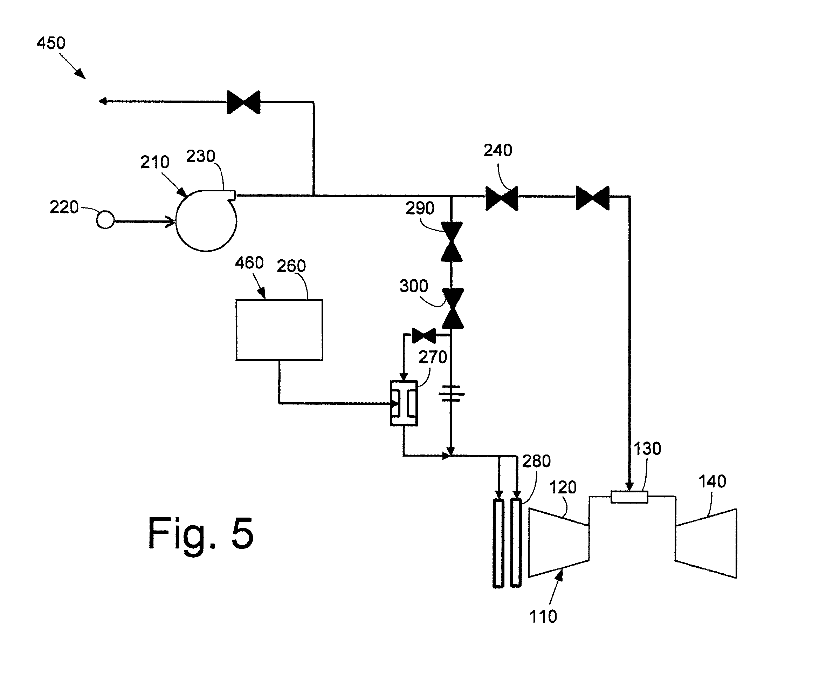

Fig. 5 shows a schematic diagram of an example of a simple cycle system 450 as may be described herein. The simple cycle system 450 may be similar to the combined cycle system 100 described above, but without the use of the steam turbine 144 and the heat recovery steam generator 150. As such, a compressor water wash system 460 thus uses the demineralized water supply 220 and the high pressure water injection pump 230 of the water injection system 210 for both online and offline use. The use of the water injection system 210 in this fashion also eliminates the need for a separate water wash pump and skid. Other components and other configurations may be used herein.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

## Claims

1. A water wash system (60) for use with a compressor (120) of a gas turbine engine (110), comprising:
a plurality of spray nozzles (280) in communication with the compressor (120);
a heat recovery steam generator (150);
a flow of heating water (160) from the heat recovery steam generator (150); and
a tap off line (310) in communication with the flow of heating water (160) and the plurality of spray nozzles (280) so as to deliver the flow of heating water (160) to the compressor (120).

2. The water wash system of claim 1, wherein the heat recovery steam generator (150) comprises an intermediate pressure section (180) and wherein the flow of heating water (160) originates in the intermediate pressure section (180).

3. The water wash system of claim 2, wherein the intermediate pressure section (180) comprises an intermediate pressure economizer (190) and wherein the flow of heating water (160) originates downstream of the intermediate pressure economizer (190).

4. The water wash system of any of claims 1 to 3, further comprising a performance heater (170) in communication with a flow of fuel for a combustor (130) of the gas turbine engine (110) and wherein the flow of heating water (160) is in communication with the performance heater (170).

5. The water wash system of claim 4, further comprising a condenser (146) downstream of the performance heater (170).

6. The water wash system of claim 5, wherein the tap off line (310) originates between the performance heater (170) and the condenser (146).

7. The water wash system of any preceding claim, wherein the tap off line (310) comprises a pressure regulator.

8. The water wash system of any preceding claim, further comprising a water supply (220) in communication with a combustor (130) of the gas turbine engine (110).

9. The water wash system of claim 8, wherein the water supply (220) is in communication with the plurality of spray nozzles (280) via at least one of a high pressure pump (230) and a pressure relief valve (300).

10. The water wash system of claim 8 or 9, further comprising a detergent tank (260) downstream of the water supply (220).

11. The water wash system of claim 10, further comprising an eductor (270) in communication with the detergent tank (260).

12. The water wash system of any preceding claim, wherein the tap off line (380) comprises a pressure exchanger (370) thereon.

13. The water wash system of claim 12, wherein the pressure exchanger (370) is in communication with a water source (220) and a condenser (146).

14. The water wash system of any preceding claim, further comprising a combined cycle system (350) or a single cycle system (450).

15. A method of operating a water wash system (250) for a compressor (120) of a gas turbine engine (110), comprising:
diverting a flow of heating water (160) from a heat recovery steam generator (150);
passing the diverted flow of heating water (160) through a performance heater (170) to heat a flow of fuel (20) for a combustor (130) of the gas turbine engine (110); and
flowing the diverted flow of heating water (160) to a plurality of spray nozzles (280) positioned about the compressor (120).
